# EUROPEAN PATENT APPLICATION

(11) **EP 1 953 630 A1**
(43) Date of publication of application: **06.08.2008**
(21) Application number: 07101704.0
(22) Date of filing: 05.02.2007
(51) Int. Cl.: G06F 3/048

(54) **Method and System for Cueing Panning**

(71) Applicant: Research In Motion Limited, Waterloo, Ontario N2L 3W8 (CA)
(72) Inventor: Scott, Sherryl Lee Lorraine, Toronto Ontario M5T 1Y4 (CA); Mujkic, Alen, Mississauga Ontario L5J 2E3 (CA)
(74) Representative: Patel, Binesh

(57) **Abstract**

Panning the display of content on a computing device, particularly a handheld device, can be awkward using incorporated track wheels or track balls especially when walking and operating the device. A graphical user interface displays panning cues for directions associated with the content to be panned to instruct a user how to pan using at least one input device of the computing device. During a panning operation, a respective panning cues is displayed to reinforce the selected operation.

## Description

### FIELD

The present application relates to the rendering of content on a display and more particularly a method and system for establishing visual cues for a panning graphical user interface (GUI) and the panning of content in response to user input.

### BACKGROUND

Devices such as personal computers, handheld devices, wireless mobile devices (cellular phones, PDAs, etc.) typically have a method for panning or navigating through or within content. Content may be displayed through a user interface for an application or operating system for the device, for example. Content can be rendered through an interface in numerous ways including, for example, by scrolling through the viewable portion of the content, shrinking the viewable content so that it is rendered in greater detail ("zooming in"), and expanding the viewable content so that it is rendered in less detail ("zooming out").

Users often do not read user guides or manuals to find out how to perform certain tasks and rely on the device interfaces being easy to use and learn by trying the interface.

Panning or navigating through content can be difficult, particularly in certain contexts. Two-handed operation while standing still may not be a preferred mode for the user in all cases. For example, when navigating through content on a handheld mobile device using a map navigation application giving directions, the user may be walking and looking around at the same time. The user would like to use the device with one hand while walking, occasionally looking at the display on the device and the surrounding environment to confirm the user is travelling as desired and safely. It may be difficult to precisely select the desired input for navigating. It may be difficult to confirm a recent input, ensuring the device is operating as intended.

Navigating through content in such ways can be unpredictable. Input methods are not always precise. For example, using a point device and a touch screen interface while walking may occasion erroneous inputs.

As a result, the user does not always know with precision what navigation instructions were inputted.

Navigating through content in such ways can be difficult for both inexperienced and experienced users. A user may not always know what input to give to carry out certain navigation instructions, nor may a user know precisely what input they have previously given.

Certain devices may already display user instructions to guide navigation on the interface. These types of user instructions, however, often interfere with the visual rendering of the content. Interference may, for example, be the result of the instructions constantly taking up a portion of the display media, reducing the area of the display media available for the display of the content. Interference may also, for example, take the form of rendering visual instructions over the entire display temporarily after certain user input (such as a "menu" selection).

A solution that addresses one or more of these issues is therefore desired.

### SUMMARY

Panning the display of content on a computing device, particularly a handheld device, can be awkward, especially when walking and operating the device. A graphical user interface displays panning cues for directions associated with the content to be panned to instruct a user how to pan using at least one input device of the computing device. During a panning operation, a respective panning cue is displayed to reinforce the selected operation.

In one embodiment, there is provided a method of viewing content displayed in a graphical user interface (GUI) on a display screen of a computing device. The method comprises displaying a plurality of panning cues for panning directions associated with the content to instruct a user how to pan using at least one input device of the computing device; and panning the content in response to user input via the at least one input device indicating a direction to pan and, in association with the panning, displaying a respective panning cue associated with the direction to pan thereby to acknowledge the user input.

Displaying a respective panning cue may comprise, at least temporarily, displaying only the respective panning cue associated with the direction to pan. Following such a temporary display the panning cues may be re-displayed. Displaying a respective panning cue in association with the panning operation may comprise moving the respective panning cue about the display screen to indicate the direction to pan. Typically panning cues will comprise labels indicating which are the respective plurality of input devices to be used. Thus, in response to a user input to pan in a direction, the representation of the respective panning cue may change. For example, when the content comprises a map, displaying a respective panning cue may display a compass direction associated with the respective panning cue.

Preferably, the at least one input device comprises a plurality of keys and the GUI associates the keys to respective panning directions whereby an input from one of the keys signals the GUI to pan the content in the associated respective direction. The panning cues may comprise key labels indicating which respective keys are enabled for panning the content. Preferably, the plurality keys are also associated for telephone number input in a telephone GUI for the computing device. The GUI may provide a user interface element (e.g. a menu with a panning option) for a user to initiate panning of the content and wherein the step of displaying a plurality of panning cues is performed in response to an invocation of the user interface element to initiate panning.

Computer program product and computer system/device aspects will also be apparent to those of ordinary skill in the art.

### BRIEF DESCRIPTION OF THE DRAWINGS

In order that the subject matter may be readily understood, embodiments are illustrated by way of examples in the accompanying drawing in which:

Figures 1, 2, 3A-3B and 4A-4B illustrate views of embodiments of a panning GUI comprising visual cues in which panning cues overlay the display screen of a first representative device;

Figures 5A and 5B illustrate views of another embodiment of a panning GUI comprising visual panning cues and in which the panning cues overlay the display screen of a second representative device;

Figure 6 is a flow chart of operations of a panning GUI comprising visual cues in accordance with an embodiment; and

Figure 7 is a block diagram of a representative handheld communication device according to the prior art that may be configured with a GUI as described.

### DETAILED DESCRIPTION

The description and drawings herein present a visual technique for panning or navigating through content or within content on devices such as but not limited to personal computers, handheld devices, or wireless mobile devices (cellular phones, PDAs, etc.). The visual cues may be used for manipulating the view on the device's display screen.

The content through which a user can navigate can include images, maps, pictures, blueprints, and other detailed graphic designs, for example whether alone or in combination with text or other associated data.

At the beginning of a navigation or panning session, visual information is rendered in the form of visual panning cues that depicts instructions to the user for navigating or panning through content on a device.

Visual information also is temporarily rendered within the visual content display on the device in the form of current and previous navigation input.

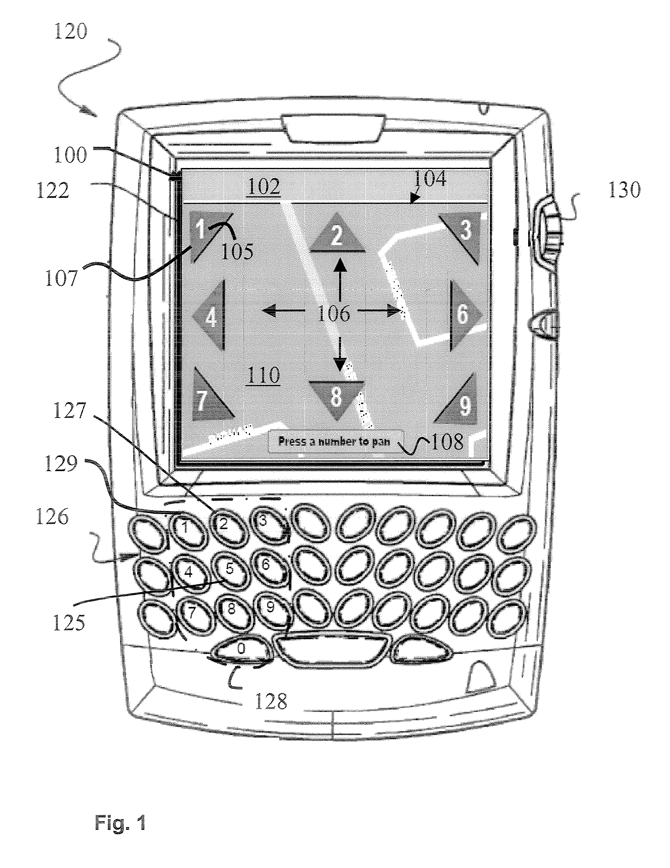

Figures 1, 2, 3A-3B and 4A-4B illustrate views, including example screen shots, of embodiments of the panning GUI in which panning cues overlay the display screen 122 of a first representative handheld device 120. These embodiments show views of the panning GUI through screen shots 100, 200, 300, 302, 400 and 404 of a map viewing application in which panning direction arrows (collectively 106) are depicted with numeric key labels (e.g. "1" 105 on individual cue 107) for the panning cues. In the representative embodiment, view 100 of the GUI comprises a banner portion 102 atop the display screen 122 such as for showing the name or an icon for the application or status information (all not shown) and a main display portion 104 in which to display the map content 110.

Persons of skill in the art will appreciate that a particular map may comprise multiple images to improve communication, storage and other performance factors. Different images may be used to construct adjacent portions of a map or to show more or less map detail (e.g. through zooming in or out). The area of a single image may be larger than the available display area of a device's display screen (or the portion thereof dedicated to viewing content) or images defining adjacent portions of the map may be available for display. Panning is a way to bring these off-screen images or image portions on-screen. It is noted that the images or visual representations can be 2D or 3D graphical representations or real life, real time photographs (e.g. satellite/aerial) or even video and combinations of same such as graphical representations overlaying photographs.

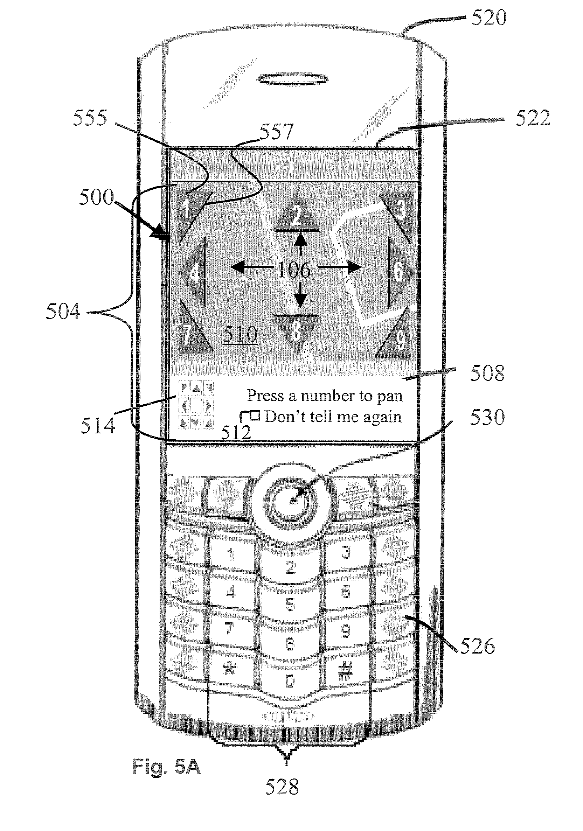

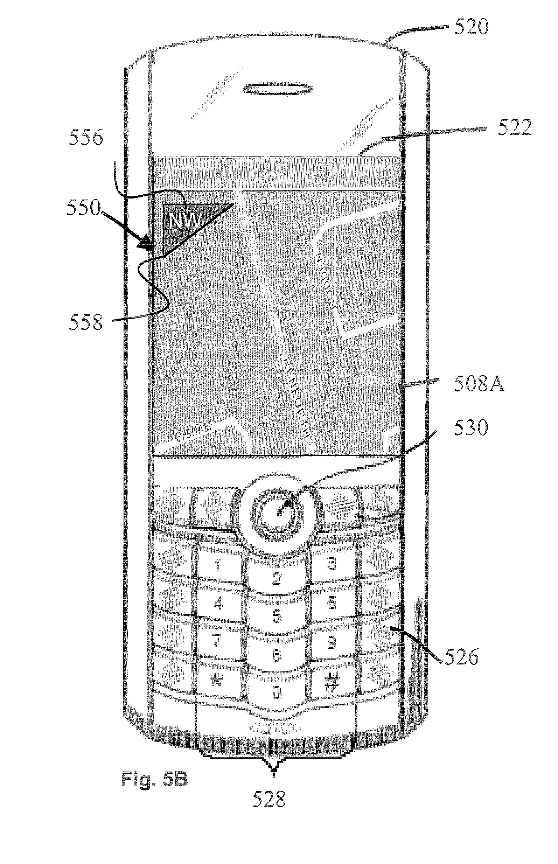

Handheld devices are often used by people on the move, whether when walking, driving or otherwise. Many handheld devices (e.g. 120 of Fig. 1 and 520 of Fig. 5) incorporate a track wheel (e.g. 130 Fig. 1) or track ball (530 Fig. 5) input devices for operating GUIs and navigating about a display screen (122 and 522 respectively). Movement of the user, especially when walking and using the handheld device (120 or 520), often with one hand only, may translate through the user to his or her hands such that fine control of a track wheel 130 or tack ball 530 may not be as effective as when a user is not moving during operation of these input devices. When operating these types of input devices 130, 530 or other pointing devices (such as stylus activated touch screens or other touch screens not shown), unintentional GUI inputs may be occasioned which result in undesired panning instructions.

To address this effect, in some embodiments, the GUI illustrated herein accepts inputs from keys (e.g. 128 and 528) of the handheld device (120 and 520) for panning. In this way, control of panning may be enhanced as pressing keys is typically easier to control when a user is moving or using the device with one hand. An array of keys (preferably 8 peripheral keys of a 3 X 3 array) may be associated to respective panning direction inputs. Pressing one of the associated keys signals the GUI to pan the image in that direction by a predetermined amount. The image may be notionally divided into equal portions, preferably 9 in a 3 X 3 arrangement. In some embodiments, all but the central portion maybe assigned a key for panning. Pressing one of the associated keys pans the portion of the image associated with the one key to the centre of the display screen. For example, panning to the right moves the middle right portion of the image to the centre of the display, shifting the left top, left middle and left bottom portions off the display and the adjacent central portions to the left. Off screen portions of an image fills in the right side of the display body portion 104. Finer or coarser panning may be implemented. A user option may also be provided to set the panning parameter. Holding down one of the keys may be configured to continue to pan in the selected direction. GUI functionality may but need not be associated with the center key 125 of the array of keys 128. For example, pressing the center key 125 may "undo" the last panning operation. Alternatively all panning operations may be "undone", returning the content to the original view before panning commenced.

In brief, the visual cues 106 in the embodiments in Figures 1, 2, 3A-3B and 4A-4B correspond to buttons or keys 128 on the keypad 126 of the handheld device 120 (such as a PDA or cellular phone, for example). The cues 106 depicted in the screen shots correspond to the keys 128 on the device 120 in such a way that the cues 106 indicate by their appearance which keys 128 correspond to which panning instructions. The association of panning direction arrows and numeric keys is representative and need not be the case for all panning cue embodiments. Other keys may be used. Similarly the cues 106 may take different forms. Different shapes may be used or even no shape, showing only a label for the associated key (e.g. "1" 105).

Cues 106 are preferably shown about the margin of the main display area 104 or the content 110 being displayed. The position of the cue assists with the instruction to the user, suggesting what will occur if the associated key is pressed. The position about the margin is also helpful to free the center of display area 104 for clearer viewing of the content. The cues 106 and other cueing information (e.g. 108) may be rendered with transparency to permit viewing, at least in part, of the content 110 therebehind.

When a key (e.g. 129) is pressed the corresponding visual cue (e.g. 107) reacts according to the below description, notifying the user of the panning direction selected. The content (e.g. image(s) 110) is then redefined according to the selected panning direction.

In the embodiments depicted in Figures 1, 2, 3A-3B, 4A-4B and 5A-5B and in accordance with a preference, the cues 106 are associated with a selection of the numeric buttons or keys that are also useful for entering a telephone number in a respective telephone number composition GUI (not shown) on the device. Such a number composition GUI may be for dialling a telephone number or entering telephone number contact information, etc. using the device 120. Often the keypads 126 are labelled with the numbers in a familiar arrangement adopted from conventional (POTS) telephone dialling interfaces. Other numeric key layouts (e.g. calculator layouts) or non-numeric keys may be used. The telephone keys are particularly suited to wireless mobile devices in embodiments where they are prominently labelled. Users of such devices are familiar with the layout. Providing another GUI feature (i.e. the panning operations) using a familiar input means facilitates instruction of the user and adoption of the feature.

The content depicted in the embodiments of Figures 1, 2, 3A-3B, 4A-4B and 5A-5B is a map comprising a plurality of images (e.g. 110, 510). Persons of ordinary skill in the art will appreciate that certain basic details related to operations of the map viewing application are omitted as they would be well understood to persons of ordinary skill. For example, selection and retrieval of the map images, communications for such operations and rendering or other displaying operations are not described.

Figures 1, 2, 3A-3B and 4A-4B include cues 106 and optional instructions 108 to the user outlining the means by which navigation can be carried out. These instructions 108, which may not exist in all views of an embodiment or in all embodiments, overlay the display and notify the user of the general instructions of the visual panning cues 106.

View 100 of Figure 1 shows the display of the panning cues 106 on the display screen 122 at the commencement of a panning session. Additional panning information may be shown such as instructions 108. The display of the panning cues 106 and optional instructions 108 may be automatic. For example they may be displayed automatically when the map viewing application initially displays a map image. Preferably, they are displayed in response to user input such as by selecting a panning option from a GUI interface element (e.g. a menu (not shown)) for invocation. As is well-known, the GUI may provide a pop-up or other menu with one or more menu selections for operating the application. One option in the menu may be configured for instructing panning of the content 110. The selection of this option may be configured to invoke the display of the instructions cues 106 and 108. The selection may also enable or disable the panning feature (turn panning on or off) through the key inputs such that, when disabled, the GUI ignores panning key inputs.

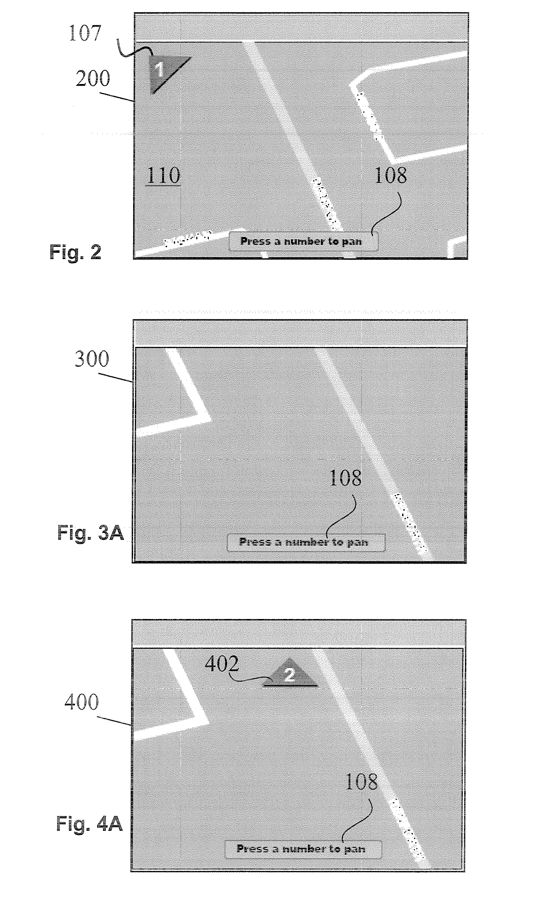

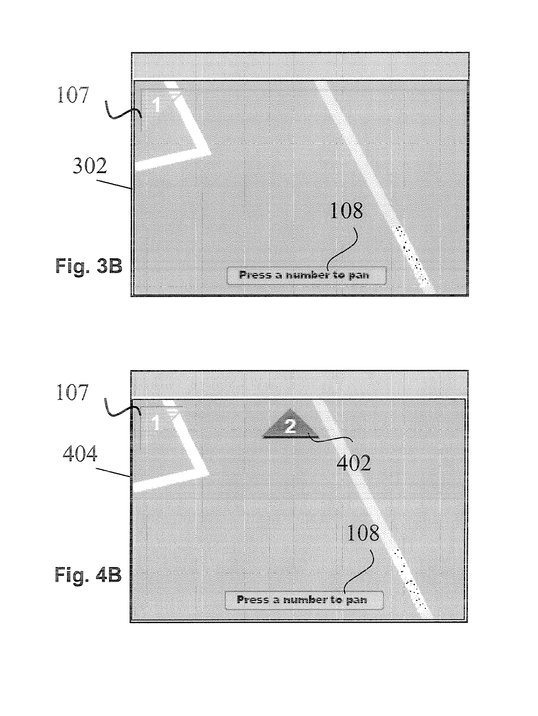

Figure 2 shows a resulting screen shot view 200 following a user input to instruct the GUI to pan up and to the left using number key 1 (129). It will be recognized that the first representative device 120 is omitted in Figures 2, 3A-3B and 4A-4B for convenience. In the embodiment of Figures 1, 2, 3A and 4A, once a particular panning key is pressed, the associated panning cue is shown to the exclusion of other panning cues 106 to highlight or confirm which input was received and thus which panning operation is executing. Figure 2 is a snapshot just after the panning direction corresponding to cue 107 is selected and Figure 3A is a snapshot showing view 300 shortly after panning in that direction is completed and content 110 is updated in display portion 104 accordingly. Typically, the content 110 appears to pan under the panning cue (e.g. 107) as the cue remains in the same location of the display screen 122 and the content 110 moves underneath. When this panning is complete and the updated content 110 is displayed the cue (e.g. 107) may be removed from the display screen 122 as depicted in Figure 3. Panning instruction 108 may remain as a guide to panning.

When a panning session is underway and in a situation in which no visual panning cues 106 remain on the visual display, a user may wish to continue panning. In such a case the user can select an option (not shown) which will display (i.e. re-display) all of the visual panning cues 106. Alternatively, the user may wish to continue navigating or panning without viewing all of the visual panning cues 106 and simply press an associated key 128 for panning. Figure 4A depicts this alternative in view 400 in which the user selects the input key "2" 127 on the input device corresponding to cue 402. Cue 402 appears on the screen 122 at the commencement of the panning of the content 110 in that direction and may be removed at its completion as per Figure 3.

In some embodiments, the cue corresponding to the selected input key may remain on the display screen 122 for a set period of time or during panning and then disappear gradually (i.e. fade out) partially or wholly.

The embodiment depicted in Figures 1, 2, 3B and 4B illustrates a partial fade out of a panning cue that results in a trail of panning cues providing a short panning history that reinforces the user's navigation. View 302 in Figure 3B shows cue 107 fading (i.e. becoming semi-transparent), reinforcing the previous panning selection yet permitting a view of the content underneath. When a subsequent panning operation is entered (e.g. Figure 4B), the semi-transparent panning cue 107 may remain on the display 122 as the corresponding next panning cue 402 is displayed in full. Though not shown, over time, panning cue 107 could be removed and cue 402 made semi-transparent. Should a user repeat the same panning operation (e.g. pressing the same panning key 129 twice), a semi-transparent panning cue (e.g. 107) may be replaced with its corresponding full opaque cue as per Figure 2 to reinforce the entry. Thus, the current panning cue and last panning cue (if different) may be displayed in a trail of cues to reinforce the selections.

In some embodiments (not shown), the group of panning cues 106 may re-display (e.g. in a semi-transparent fashion) after a panning operation to guide a further panning operation. The re-display may be in response to a preset time period and/or input inactivity.

If panning or navigating cannot proceed in one or more panning directions, (e.g. because an edge (or edges) of the content 110 is reached) the respective panning cues that correspond to these directions can be distinguished from other panning cues for available panning directions. For example, different colors or a different shade of the same colour can be used. The inactive directional cues may be transparent (or more transparent than the available cues), etc. Alternatively, the cues for unavailable directions need not be displayed. In this way users can be notified of the inability to navigate or pan in certain directions-such as when the edge of a map is reached. If user input corresponding to a direction in which panning cannot proceed is selected, no panning will occur. If such user input is selected the corresponding visual panning cue may notify the user that panning or navigating cannot occur in that direction. Such notification may take the form of a sound emanating from the device or of the selected panning cue changing colour or flashing.

Though not shown, it is contemplated that in some embodiments, after a numeric-arrow panning cue 106 or other type of visual panning cue is selected, the GUI can pan the content 110 in the direction of the selected panning cue and the panning cue will appear to drift across the screen, reinforcing the direction selected by the user. This type of dynamic panning visual cue technique need not be restricted to numeric-arrows: it can include letter-arrows, symbols representing different directions, or any inputs on the device that a user might select.

Panning operations may also be emphasized by display option changes to the content (e.g. map) being panned. The map or a portion thereof made fade temporarily. For example, the portion moving off (or onto) the display screen may fade out (or in respectively) while panning, emphasizing the direction selected.

Figures 5A and 5B illustrate views 500 and 550 of another embodiment of the panning GUI comprising panning cues as displayed on a second representative device 520. In this embodiment, like the first embodiment, panning cues 106 are associated with number entry buttons or keys 529 on a keypad 526. The embodiment of Figures 5A and 5B includes additional panning information 508 in the form of further user instructions and an option 512 whereby the user can choose to turn off the display of the visual panning cues 106 and information 508.

In view 500, the information 508 is shown over a part of portion 504 normally used to display content 510. Information 508 in this embodiment contains a legend 514 depicting the possible input selections. The legend depicts the panning directions. It may include a depiction of the associated keys (not shown). In addition, the information 508 in this embodiment contains a selection option 512 whereby the user can select to not have the information 508 displayed at the commencement of and during subsequent panning sessions. In the current embodiment, information 508 is typically removed (508A of Figure 5B indicates the removal area) immediately in response to a key press to view more content 510 in portion 504. In some embodiments it may be possible to direct the information 508 to re-appear on the screen via the selection of a certain input key or input option (not shown).

The panning GUI of the present embodiment may operate in a similar way to the embodiments of Figures 1, 2, 3A-3B and 4A-4B. For example, similar to the operations described with reference to Figures 2, 3A and 4B, in response to a key press for a panning direction, the associated cue can be displayed to the exclusion of other cues. Upon completion of the pan, the cue may be removed. A selected cue could fade out (e.g. like Figure 3B) or a trial illustrated (Figure 4B). The background content may be redrawn to emphasize the panning selection (not shown).

In the current embodiment of Figures 5A and 5B, the panning cues are also associated to compass directions. Such is useful for map applications for panning in accordance with relative directions. For example, panning cue 557 with label "1" (555) is associated to the Northwest (NW) compass direction. When the panning cue is invoked, such as by pressing the corresponding key, the associated direction may be displayed to reinforce the selected panning operation. In view 550, label 55 is replaced with label "NW" 556 on cue 558. When the map 510 being displayed is oriented with North at the top of the map, the panning cues 106 may be associated with the compass directions as follows:

**Table 1: Panning Cue Keys and Associated Compass Directions**

| **Cue** | **Direction** |
|---|---|
| 1 | → NW |
| 2 | → N |
| 3 | → NE |
| 4 | → W |
| 6 | → E |
| 7 | → SW |
| 8 | → S |
| 9 | → SE |

Panning information like information 108 of Figures 1, 2, 3A-3B and 4A-4B may be displayed to provide instructions or alternatively no such instructions may be displayed.

It is contemplated that the panning GUI may be configured so that the panning cue corresponding to a selected direction will appear to trace across the visual display after it is selected as the user input. In such a situation the GUI will pan or navigate according to the input selected (which corresponds to one of the visual cues); the particular cue selected will remain on the display portion 104 and appear to drift toward the centre of the display 522 as the content pans and the cue will fade out and disappear after a predetermine amount of time, thus reinforcing the effect of the panning or navigating.

In still yet a further embodiment, the cues 106 may remain displayed following an input from a panning key and the associated cue may be highlighted to acknowledge the input and reinforce the panning operation. The associated cue may blink or otherwise be distinguished from the other cues at least temporarily.

In another embodiment the visual cues or panning information may provide instructions for content "zooming in" and "zooming out" functions to change the resolution of the content. The zooming in function corresponds to the content becoming more refined and the zooming out function corresponds to the content becoming more general and less refined. In such an instance a tracing can be effected by allowing the visual cue to become less or more refined in sync with the particular visual cue selected; again, the visual cue will fade out and disappear after a set period of time.

The input device need not be numeric keys as depicted in the Figures. For example in one embodiment an input device may comprise a touch-screen device either with or without a stylus, whereby the user selects the visual cues by touching the location of the visual cues on the visual display. In another embodiment the input device could be a roller-ball (530) located on a handheld device, whereby the direction of the rolling could correspond to one of the visual panning cues; and in another embodiment, the input device could be a voice activated system, whereby the visual cues could be enacted via a user's voice. In some embodiments, the GUI may be configured for operation using two or more input means, for example, accepting panning input by keys and/or roller to pan.

Other key-like inputs may be used too. For example, the display screen of the device may present both a region for displaying the content and a region displaying soft keys (i.e. software keys as contrasted with hardware keys of a keyboard) or other input buttons. Selecting these buttons or soft keys may be configured as inputs to control panning. A further alternative includes dividing relatively adjacent keyboard keys into groups (e.g. 4 groups of keys) and associating all the keys of a particular group to the same input for panning purposes. Leftmost keys could be grouped such that pressing any one of the keys pans to the left. Bottommost central keys on the keyboard may pan down if any one key is pressed. In this way, pressing need not be as precise as selecting an individual key, which may be small and awkward when walking.

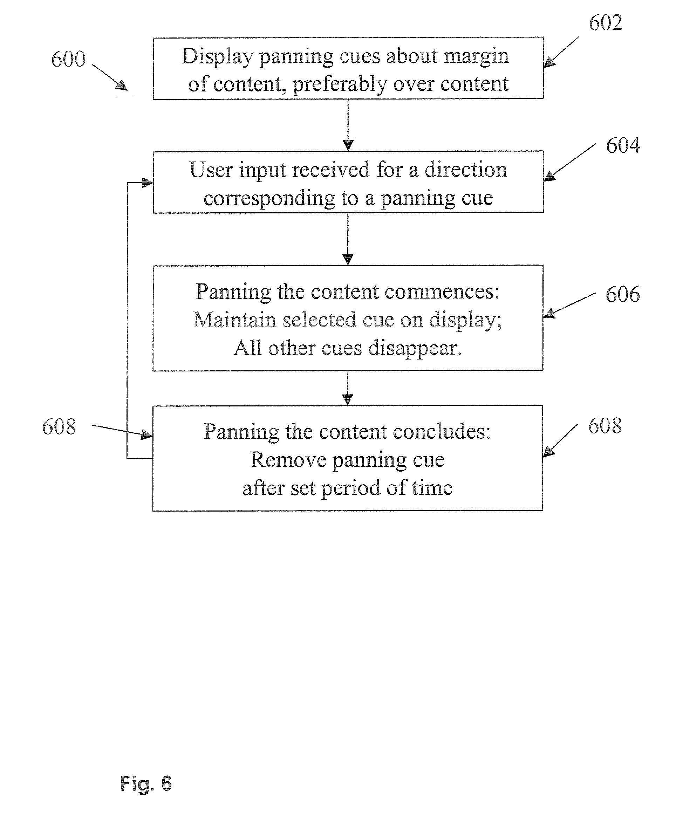

Figure 6 illustrates a flow chart of simplified operations 600 of the panning GUI in accordance with an embodiment. Operations with respect to the display of panning cues are described. Other panning operations and operations of an associated application are not described and will be understood to persons of ordinary skill.

At the commencement of a panning session (e.g. via a menu command (not shown)), the panning cues 106 are displayed (step 602), preferably over the content and preferably about the margin of the content 110 in display portion 104. Further instruction such as panning information 108 or 508, as applicable to the embodiment, may also be displayed (not shown in Figure 6). The positioning of cues 106 may be configured to accommodate such information.

When user input is received indicating a respective panning direction (step 604) the GUI pans the content 110 in response. In association with the panning, (e.g. before, while or after or a combination thereof), a respective panning cue is displayed in a manner to acknowledge the input. For example, for a short time or momentarily after the panning has occurred the respective panning cue remains on the screen and, in accordance with the present embodiment, all other visual cues disappear (step 606). After a predetermined period of time elapses and after panning has concluded the display of the remaining panning cue is removed (step 608). As shown in Figures 5A and 5B, the specific representation of the panning cue corresponding to the invoked panning direction may change in response to the panning invocation. For example, the panning cue label may be changed such as to show a compass direction. Other changes will be apparent to those of ordinary skill in the art (colour, blinking, brightness, etc.)

Persons of ordinary skill in the art will appreciate that more complicated user input activities may be occasioned, such as receiving user inputs while performing one or more of operations 606 and 608. Operations 900 may be adapted to handle such inputs. For example, panning may be responsive to a duration of a key press. Panning may sequentially handle inputs or interrupt processing and handle in a different order.

As described above, persons of ordinary skill in the art will appreciate that operations 600 may be adapted to provide the different embodiments of the panning cues, for example, re-displaying the cues 106 following a panning operation, or displaying cues that indicate when an edge of the content is reached.

Though not shown, the handheld devices 120 and 520 are configured (e.g. via software) to comprise various components including an operating system, a communications system for wireless communication, and applications such as a map viewing application for viewing map images as described with reference to Figures 1, 2, 3A-3B, 4A-4B and 5A-5B. Other viewing applications with panning features as described may include spreadsheet viewers, picture viewers, word processing document viewers, web browsers, etc.

Though the embodiments shown and described are with respect to map images, other content, whether image-based or not may be viewed and panned using a similar GUI in which the GUI illustrates how to pan using panning cues and optionally other information.

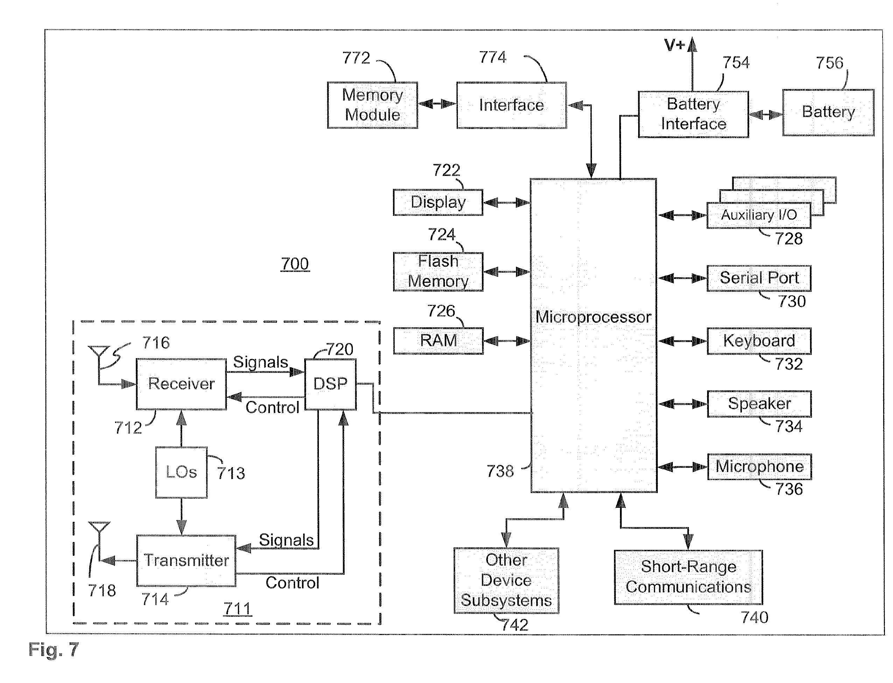

Fig. 7 is a detailed block diagram of an embodiment of a handheld wireless communication device 700 in accordance with the prior art that may be configured as either of devices 120 and 520 as described. Handheld device 700 is preferably a two-way communication device having at least voice and advanced data communication capabilities, including the capability to communicate with other computer systems. Depending on the functionality provided by handheld device 700, it may be referred to as a data messaging device, a two-way pager, a cellular telephone with data messaging capabilities, a wireless Internet appliance, or a data communication device (with or without telephony capabilities). Handheld device 700 may communicate with any one of a plurality of base station transceiver systems (not shown) within its geographic coverage area.

Handheld device 700 will normally incorporate a communication subsystem 711, which includes a receiver 712, a transmitter 714, and associated components, such as one or more (preferably embedded or internal) antenna elements 716 and 718, local oscillators (LOs) 713, and a processing module such as a digital signal processor (DSP) 720. As will be apparent to those skilled in field of communications, particular design of communication subsystem 711 depends on the communication network in which handheld device 700 is intended to operate.

Handheld device 700 may send and receive communication signals over the network after required network registration or activation procedures have been completed. Signals received by antenna 716 through the network are input to receiver 712, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 720. In a similar manner, signals to be transmitted are processed, including modulation and encoding, for example, by DSP 720. These DSP-processed signals are input to transmitter 714 for digital-to-analog (D/A) conversion, frequency up conversion, filtering, amplification and transmission over communication network via antenna 718. DSP 720 not only processes communication signals, but also provides for receiver and transmitter control. For example, the gains applied to communication signals in receiver 712 and transmitter 714 may be adaptively controlled through automatic gain control algorithms implemented in DSP 720.

Network access is associated with a subscriber or user of handheld device 700, and therefore handheld device 700 comprises a memory module 772, memory module card or a Removable User Identity Module (R-UIM), to be inserted in or connected to an interface 774 in order to operate in the network. Alternatively, memory module 772 may be a non-volatile memory that is programmed with configuration data by a service provider so that mobile station 700 may operate in the network. Since handheld device 700 is a mobile battery-powered device, it also includes a battery interface 754 for receiving one or more rechargeable batteries 756. Such a battery 756 provides electrical power to most if not all electrical circuitry in handheld device 700, and battery interface 754 provides for a mechanical and electrical connection for it. The battery interface 754 is coupled to a regulator (not shown in Fig. 7) that provides power V+ to all of the circuitry.

Handheld device 700 includes a microprocessor 738 that controls overall operation of mobile station 700. Communication functions, including at least data and voice communications, are performed through communication subsystem 711. Microprocessor 738 also interacts with additional device subsystems such as a display 722, a flash memory 724, a random access memory (RAM) 726, auxiliary input/output (I/O) subsystems 728, a serial port 730, a keyboard 732, a speaker 734, a microphone 736, a short-range communications subsystem 740, and any other device subsystems generally designated at 742. Some of the subsystems shown in Fig. 7 perform communication-related functions, whereas other subsystems may provide "resident" or on-device functions. Notably, some subsystems, such as keyboard 732 and display 722, for example, may be used for both communication-related functions, such as entering a text message for transmission over a communication network, and device-resident functions such as a calculator or task list. Operating system software used by microprocessor 738 is preferably stored in a persistent store such as flash memory 724, which may alternatively be a read-only memory (ROM) or similar storage element (not shown). Those skilled in the art will appreciate that the operating system, specific device applications, or parts thereof, may be temporarily loaded into a volatile store such as RAM 726.

Microprocessor 738, in addition to its operating system functions, preferably enables execution of software applications on handheld device 700. A predetermined set of applications that control basic device operations, including at least data and voice communication applications, will normally be installed on handheld device 700 during its manufacture. A preferred application that may be loaded onto handheld device 700 may be a personal information manager (PIM) application having the ability to organize and manage data items relating to a user such as, but not limited to, e-mail, calendar events, voice mails, appointments, and task items. Naturally, one or more memory stores are available on handheld device 700 and memory module 772 to facilitate storage of PIM data items and other information. Device 700 may store a map application or other application (e.g. browser, spreadsheet, image or document viewing or processing application, etc.) comprising a GUI for panning as described herein.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on handheld device 700 with respect to such items. This is especially advantageous where the host computer system is the mobile station user's office or enterprise computer system. Additional applications may also be loaded onto handheld device 700 through network, an auxiliary I/O subsystem 728, serial port 730, short-range communications subsystem 740, or any other suitable subsystem 742, and installed by a user in RAM 726 or preferably a non-volatile store (not shown) for execution by microprocessor 738. Such flexibility in application installation increases the functionality of handheld device 700 and may provide enhanced on-device functions, communication-related functions, or both. For example, secure communication applications may enable electronic commerce functions and other such financial transactions to be performed using handheld device 700.

In a data communication mode, a received signal such as a text message, an e-mail message, or web page download will be processed by communication subsystem 711 and input to microprocessor 738. Microprocessor 738 will preferably further process the signal for output to display 722 or alternatively to auxiliary I/O device 728. A user of handheld device 700 may also compose data items, such as e-mail messages, for example, using keyboard 732 in conjunction with display 722 and possibly auxiliary I/O device 728. Keyboard 732 is preferably a complete alphanumeric keyboard and/or telephone-type keypad. These composed items may be transmitted over a communication network through communication subsystem 711.

For voice communications, the overall operation of handheld device 700 is substantially similar, except that the received signals would be output to speaker 734 and signals for transmission would be generated by microphone 736. Alternative voice or audio I/O subsystems, such as a voice message recording subsystem, may also be implemented. Although voice or audio signal output is preferably accomplished primarily through speaker 734, display 722 may also be used to provide an indication of the identity of a calling party, duration of a voice call, or other voice call related information, as some examples.

Serial port 730 in Fig. 7 is normally implemented in a personal digital assistant (PDA)-type communication device for which synchronization with a user's desktop computer as a desirable, albeit optional, component. Serial port 730 enables a user to set preferences through an external device or software application and extends the capabilities of handheld device 700 by providing for information or software downloads to handheld device 700 other than through a wireless communication network. The alternate download path may, for example, be used to load an encryption key onto handheld device 700 through a direct and thus reliable and trusted connection to thereby provide secure device communication.

Short-range communications subsystem 740 is an additional optional component that provides for communication between handheld device 700 and different systems or devices, which need not necessarily be similar devices. For example, subsystem 740 may include an infrared device and associated circuits and components, or a Bluetooth^{™} communication module to provide for communication with similarly enabled systems and devices. Bluetooth^{™} is a registered trademark of Bluetooth SIG, Inc.

Although specific embodiments of the invention have been described herein, it will be understood by those skilled in the art that variations may be made thereto without departing from the spirit of the invention or the scope of the appended claims.

## Claims

1. A method of viewing content displayed in a graphical user interface (GUI) on a display screen of a computing device, said method comprising:
displaying a plurality of panning cues for panning directions associated with the content to instruct a user how to pan using at least one input device of the computing device; and
panning the content in response to user input via the at least one input device indicating a direction to pan and, in association with the panning, displaying a respective panning cue associated with the direction to pan thereby to acknowledge the user input.

2. The method of claim 1 wherein the step of displaying a respective panning cue comprises, at least temporarily, displaying only the respective panning cue associated with the direction to pan.

3. The method of claim 2 comprising re-displaying the panning cues following a temporary display of the respective panning cue.

4. The method of any one of claims 1 to 3 wherein the step of displaying a respective panning cue comprises moving the display of the respective panning cue about the display screen to indicate the direction to pan.

5. The method of any one of claims 1 to 4 wherein the step of displaying a respective panning cue associated with the direction to pan comprises displaying a trail of panning cues providing a history of recent panning operations.

6. The method any one of claims 1 to 5 wherein said content comprises a map and the step of displaying a respective panning cue comprises displaying a compass direction associated with the respective panning cue.

7. The method any one of claims 1 to 6 wherein the at least one input device comprises a plurality of hardware or software keys and the method comprises associating the keys to respective panning directions whereby an input from one of the keys signals the GUI to pan the content in the associated respective direction.

8. The method according to claim 7 wherein the panning cues comprise key labels indicating which respective keys are enabled for panning the content.

9. The method of claim 7 or 8 wherein the plurality keys are also associated for telephone number input in a telephone GUI for the computing device.

10. The method any one of claims 7 to 9 comprising associating the plurality of keys to a like plurality of portions of the content located about a central portion of the content and wherein a user input using a one of the keys pans the respective associated portion of the content to the centre of the display screen.

11. The method any one of claims 1 to 10 comprising providing a user interface element for a user to initiate panning of the content and wherein the step of displaying a plurality of panning cues is performed in response to an invocation of the user interface element to initiate panning.

12. The method any one of claims 1 to 11 comprising displaying user instructions in association with the panning cues.

13. The method of any one of claims 1 to 12 comprising displaying the plurality of the panning cues over the content.

14. The method any one of claims 1 to 13 wherein the content is at least one image defining a map and the computing device comprises a handheld communication device.

15. A handheld device having a display screen and a plurality of keys for receiving user input, said handheld device comprising:
an application for viewing content, said application having a graphical user interface (GUI) configured for:
displaying the content on the display screen;
displaying a plurality of panning cues for panning directions associated with the content to instruct a user how to pan using at least some of the keys of the computing device; and
panning the content in response to user input via one of the keys indicating a direction to pan and, in association with the panning, displaying a respective panning cue associated with the direction to pan thereby to acknowledge the user input.

16. The handheld device of claim 15 wherein when displaying a respective panning cue associated with the direction to pan, the GUI displays, at least temporarily, only the respective panning cue associated with the direction to pan.

17. The handheld device of claim 16 wherein the GUI is configured for re-displaying the panning cues following a temporary display of the respective panning cue.

18. The handheld device of any one of claims 15 to 17 wherein when displaying a respective panning cue associated with the direction to pan, the GUI moves the display of the respective panning cue about the display screen to indicate the direction to pan.

19. The handheld device of any one of claims 15 to 18 wherein when displaying a respective panning cue associated with the direction to pan, the GUI displays a trail of panning cues providing a history of recent panning operations.

20. The handheld device of any one of claims 15 to 19 wherein said content comprises a map and wherein when displaying a respective panning cue associated with the direction to pan, the GUI displays a compass direction associated with the respective panning cue.

21. The handheld device of claim 15 wherein the at least one input device comprises a plurality of hardware or software keys and the GUI associates the keys to respective panning directions whereby an input from one of the keys signals the GUI to pan the content in the associated respective direction.

22. The handheld device according to claim 21 wherein the panning cues comprise key labels indicating which respective keys are enabled for panning the content.

23. The handheld device of any one of claims 21 and 22 wherein the plurality keys are also associated for telephone number input in a telephone GUI for the handheld device.

24. The handheld device of any one of claims 21 to 23 wherein the GUI associates the plurality of keys to a like plurality of portions of the content located about a central portion of the content and wherein a user input using a one of the keys pans the respective associated portion of the content to the centre of the display screen.

25. The handheld device of any one of claims 15 to 124 wherein the GUI provides a user interface element for a user to initiate panning of the content and wherein the GUI displays the plurality of panning cues in response to an invocation of the user interface element to initiate panning.

26. The handheld device of any one of claims 15 to 25 wherein the GUI displays user instructions in association with the panning cues.

27. The handheld device of any one of claims 15 to 26 wherein the GUI displays the plurality of the panning cues over the content.

28. The handheld device of any one of claims 15 to 27 wherein the content is at least one image defining a map.

29. A computer program product having computer readable code embodied therein, for execution by a processor for configuring a computing device to view content in a graphical user interface on a display screen, said computer program product comprising instructions and data for configuring a processor of the computing device to perform the method of any one of claims 1 to 14.
